(19) Europäisches Patentamt
European Patent Office
Office européen des brevets

(11) Veröffentlichungsnummer: **0 254 025 B1**

(12) **EUROPÄISCHE PATENTSCHRIFT**

(45) Veröffentlichungstag der Patentschrift: **06.05.92**

(51) Int. Cl.$^5$: **C08B 13/00**, C08F 2/20, B01F 17/48, C04B 26/28

(21) Anmeldenummer: **87108595.7**

(22) Anmeldetag: **15.06.87**

# (54) Alkenyl- oder Alkylbernsteinsäureester enthaltende Wasserlösliche Celluloseether.

(30) Priorität: **23.06.86 DE 3620991**

(43) Veröffentlichungstag der Anmeldung:
**27.01.88 Patentblatt 88/04**

(45) Bekanntmachung des Hinweises auf die Patenterteilung:
**06.05.92 Patentblatt 92/19**

(84) Benannte Vertragsstaaten:
**AT BE CH DE ES FR GB GR IT LI NL SE**

(56) Entgegenhaltungen:
**GB-A- 2 063 880**
**US-A- 2 661 349**

(73) Patentinhaber: **Henkel Kommanditgesellschaft auf Aktien**
**Postfach 1100 Henkelstrasse 67**
**W-4000 Düsseldorf-Holthausen(DE)**

(72) Erfinder: **Peuscher, Manfred, Dr.**
**Am Nettchesfeld 40**
**W-4000 Düsseldorf 13(DE)**
Erfinder: **Engelskirchen, Konrad, Dr.**
**Gonellastrasse 24**
**W-4005 Meerbusch 3(DE)**
Erfinder: **Grünberger, Eberhard Dr.**
**Gustav-Mahler Strasse 12**
**W-4010 Hilden(DE)**

(74) Vertreter: **von Kreisler, Alek, Dipl.-Chem. et al**
**Patentanwälte Von Kreisler-Selting-Werner, Deichmannhaus am Hauptbahnhof**
**W-5000 Köln 1(DE)**

EP 0 254 025 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung ist ein Verfahren zur Herstellung Alkenyl- und/oder Alkylbernsteinsäureestergruppierungen enthaltender wasserlöslicher Celluloseether, die in der Lage sind, hochviskose wäßrige Lösungen zu bilden.

In der US-PS 2 661 349 ist ein Verfahren zur Herstellung von wasserlöslichen Derivaten der Cellulose bzw. Stärke beschrieben, bei der eine Substitution mit langkettigen Dicarbonsäureanhydriden wie Alkenylbernsteinsäureanhydrid erfolgen soll. Dort werden sowohl eine Methode in wäßrigem Medium als auch eine ohne ein Lösungsmittel (sogenannte Trockenmethode) bzw. eine in Suspension in organischen Lösungsmitteln beschrieben. In allen Fällen wird jedoch die Anwesenheit von Wasser nicht ausgeschlossen und als zwingende Maßnahme ein alkalischer Bereich, der durch einen Überschuß von beispielsweise Natriumcarbonat zu erreichen ist, verlangt. Wendet man diese Methode auf wasserlösliche Cellulosederivate an, so kann insbesondere in wäßriger Phase keine Umsetzung des Alkenylbernsteinsäureanhydrids festgestellt werden.

Aufgabe der vorliegenden Erfindung war es daher, einen neuen Weg zu finden, auf einfache und gut reproduzierbare Weise bisher unbekannte wasserlösliche Cellulosederivate herzustellen, die zusätzlich zu den bereits vorhandenen wasserlöslich machenden Gruppierungen wie Methoxyl oder Hydroxyethyl oder Hydroxypropyl noch Estergruppierungen enthalten, die sich von der Alkylbernsteinsäure ableiten, wobei im Alkylrest noch C = C-Bindungen vorhanden sein können. Ein weiteres Ziel der Erfindung war die Herstellung solcher Cellulosederivate, die sich gegenüber einfach substituierten Celluloseethern mit einer besonders hohen Viskosität in Wasser lösen.

Diese Aufgabe wird erfindungsgemäß gelöst durch die Umsetzung von wasserlöslichen Celluloseethern mit Alkenyl- bzw. Alkylbernsteinsäureanhydriden. Das erfindungsgemäße Verfahren ist dadurch charakterisiert, daß man 100 Gewichtsteile der wasserlöslichen Celluloseether mit 3 bis 30, insbesondere 5 bis 25 Gewichtsteilen Alkylbernsteinsäureanhydrid, wobei der gegebenenfalls eine oder mehrere Doppelbindungen enthaltende Alkylrest 8 bis 18, vorzugsweise 10 bis 14 C-Atome aufweist, in Abwesenheit von Wasser und Alkali bei einer Temperatur im Bereich von 40 bis 150 °C im Verlauf von 0,5 bis 12h umsetzt, so daß analytisch nachweisbar wenigstens 1 und maximal 8 Gewichtsprozent, bezogen auf den Celluloseether, der Alkylbernsteinsäureanhydride mit dem Celluloseethermolekül reagiert haben. Besonders günstige Ergebnisse werden erzielt, wenn etwa 3 bis 6 Gew.-Teile der substituierten Bernsteinsäureanhydride mit dem Cellulosemolekül reagiert haben.

Bei den Alkenylbernsteinsäureanhydriden

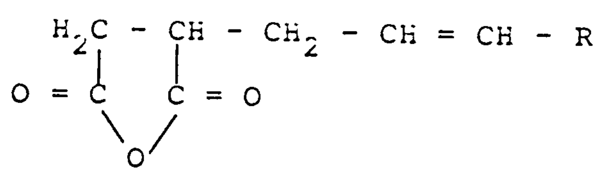

handelt es sich um bekannte Verbindungen. Sie können hergestellt werden durch indirekte substituierende Addition von alpha-Olefinen an Maleinsäureanhydrid (En-Synthese).Die im Molekül vorhandene Doppelbindung kann leicht hydriert und so das entsprechende Alkylbernsteinsäureanhydrid erhalten werden. In der Formel bedeutet R einen Alkylrest mit 5 bis 15 Kohlenstoffatomen.

Die Reaktion der substituierten Bernsteinsäureanhydride mit den wasserlöslichen Celluloseethern kann in verschiedener Weise vorgenommen werden, wobei im einfachsten Fall das Alkyl(en)-bernsteinsäureanhydrid in einem aprotischen Lösungsmittel gelöst und auf den mechanisch bewegten Celluloseether gesprüht wird. Dabei kann eine hinreichend gleichmäßige Verteilung erzielt werden, und die Reaktion verläuft relativ homogen. Weiterhin ist es möglich, den Celluloseether in einem aprotischen Lösungsmittel zu suspendieren oder aber ein Lösungsmittel für den Celluloseether selbst zu verwenden. Als aprotische Lösungsmittel, in denen man das Akyl(en)bernsteinsäureanhydrid lösen kann, kommen in Frage Ester wie Essigsäureethylester oder Essigsäurebutylester, ferner Ketone, wie Aceton und Methylethylketon, oder aber Kohlenwasserstoffe wie insbesondere Toluol, Xylol oder aliphatische Kohlenwasserstoffe mit etwa 5 bis 10 Kohlenstoffatomen im Molekül. Lösungsmittel für den Celluloseether können substituierte Amide, wie etwa Dimethylacetamid, sein.

Die Reaktionstemperatur liegt zwischen 40 und 150 °C, vorzugsweise jedoch zwischen etwa 60 und 100 °C. Die Reaktionszeit beträgt 1/2 bis 12 Stunden, insbesondere 2 bis 6 Stunden. Der Erfolg der Umsetzung zwischen den Bernsteinsäureanhydriden und den Celluloseethern kann analytisch einfach festgestellt werden, indem man den gereinigten Celluloseetherester mit Alkali behandelt und über dessen Verbrauch die Menge der eingeführten Säurereste bestimmt.

Nach beendeter Reaktion, insbesondere wenn der Celluloseether in einem Suspensionsmittel umgesetzt wurde, wird überschüssiges Lösungsmittel durch Filtrieren oder Zentrifugieren entfernt und der Rest durch Erwärmen gegebenenfalls unter Vakuum abgezogen. Bei Reaktion in einem Lösungsmittel für den Celluloseether kann mit einem mischbaren, Celluloseether nicht lösenden Lösungsmittel das Celluloseetherderivat ausgefällt werden und das Derivat in üblicher Weise isoliert werden. Zwecks Herstellung einheitlicher reiner Produkte kann man auch durch Auswaschen mit Lösungsmitteln - wie etwa Aceton oder Methylethylketon - gebildete Nebenprodukte entfernen. In vielen Fällen ist jedoch diese Reinigungsoperation nicht erforderlich, man erhält nämlich meist direkt technisch verwendbare Celluloseetherderivate.

Selbstverständlich ist es möglich, gegebenenfalls die bekannte Umsetzung wasserlöslicher Celluloseether mit Glyoxal anzuschließen, um die Celluloseetherreste in klumpenfrei lösliche Produkte zu überführen.

Die erfindungsgemäß herstellbaren neuen Derivate der Celluloseether bewirken in verdünnten wäßrigen Lösungen eine bemerkenswerte hohe Viskosität. Ferner weisen diese Lösungen in unmittelbarer Nähe des Neutralpunktes bei geringen Veränderungen des pH-Wertes eine erhebliche Änderung der Viskosität auf. Die neuartigen Celluloseetherderivate eignen sich als Verdickungsmittel für wäßrige Tensidlösungen und Farbdispersionen sowie hydraulisch erhärtende Baustoffmassen. Außerdem können sie mit Vorteil als Schutzkolloide bzw. Emulgatoren bei der Suspensionspolymerisation von wasserunlöslichen Monomeren in wäßriger Phase eingesetzt werden.

## Beispiel 1

In einem 5 l fassenden Labormischer wurden jeweils 300 g Methylhydroxypropylcellulose(Korngröße kleiner als < 0,2 mm) bei Raumtemperatur mit einer Lösung von 15, 30 bzw. 45 g Dodecenylbernsteinsäureanhydrid in 50 bzw. 100 bzw. 150 ml getrocknetem Aceton besprüht. Das feuchte Material wurde nach gutem Durchmischen während 15 Minuten in einem Trockenschrank bei 100 °C 3 Stunden getempert. Nach dem Abkühlen wurde das Reaktionsprodukt 3mal mit je 300 ml Aceton ausgewaschen und anschließend bei 100 °C bis zur Gewichtskonstanz getrocknet.

Die Analyse ergab, daß 1,0 Gew.-% bzw. 3,6 bzw. 6,0 Gew.-% Dodecenylbernsteinsäurereste eingeführt worden waren. Es wurden 1 %ige Lösungen der Reaktionsprodukte in Wasser hergestellt und mit verdünnter Natronlauge auf einen pH-Wert von 7 eingestellt. Diese Lösungen hatten bei 25 °C eine Viskosität von 3 000 bzw. 7 850 bzw. 6 900 mPa•s, gemessen mit einem Brookfield-Viskosimeter bei 20 Upm.

Die Lösung einer Vergleichsprobe von Methylhydroxypropylcellulose, welche unbehandelt war, hatte unter den gleichen Bedingungen eine Viskosität von 2 400 mPa•s.

Eine 10 gew.%ige wäßrige Lösung eines Fettalkoholethersulfats, (Texapon® ASV) der 1 Gew.% des Produktes mit 3,6 Gew.-% Dodecenylsuccinat zugesetzt wurde, wies bei pH 6 eine Viskosität von 7 900 mPa•s auf. Die Vergleichsprobe hatte nur eine Viskosität von 1 900 mPa•s.

## Beispiel 2

Jeweils 20 g handelsübliche Methylcellulose wurden in 1 000 g getrocknetem Dimethylacetamid unter leichtem Erwärmen gelöst. In den Lösungen wurden 2 bzw. 3 g Dodecenylbernsteinsäureanhydrid gegeben und die Reaktionsmischungen unter Stickstoff auf 90 °C erwärmt und unter ständigem Rühren 2 Stunden bei dieser Temperatur gehalten. Nach dem Abkühlen auf Zimmertemperatur wurden die Cellulosederivate nach Ausfällen mit einem Überschuß an Aceton isoliert. Durch 3maliges Auswaschen mit Aceton wurde von Verunreinigungen befreit und im Vakuumtrockenschrank bei 50 °C bis zur Gewichtskonstanz getrocknet.

In die erste Probe waren 2,9 und in die zweite 4,3 Gew.-% an Dodecenylbernsteinsäureresten eingeführt worden. Bei einem pH-Wert von 7 wurden in 1 gew.-%iger wäßriger Lösung bei 25 °C nach Brookfield 62 bzw. 1 000 mPa•s gemessen. Der Wert für eine ohne Dodecenylbernsteinsäureanhydrid in der gleichen Weise behandelten Vergleichsprobe lag bei einem pH-Wert von 7 bei 48 mPa•s.

Wurde der pH-Wert auf 6 eingestellt, so wurde bei dem ersten Produkt in 1 %iger wäßriger Lösung bei 25 °C eine Viskosität von 1 800 mPa•s und beim zweiten Produkt eine von 8 500 mPa•s nach Brookfield gemessen.

Beispiel 3

Wie im vorhergehenden Beispiel beschrieben wurden 20 g einer handelsüblichen Methylhydroxypropylcellulose behandelt. In diesem Fall wurden 1 g, 2 g, 3 g sowie 4,6 g Dodecenylbernsteinsäureanhydrid eingesetzt. Bei der Aufarbeitung wurden Produkte erhalten, die 2 bzw. 3,85 bzw. 4,32 bzw. 6,00 Gew.-% an Dodecenylbernsteinsäuregruppen enthielten und in 1 gew.-%iger Lösung bei pH 7 Viskositäten von 1 500 bzw. 26 000 bzw. 44 000 bzw. 40 000 mPa•s bei 25 ° C nach Brookfield hatten.

Eine Vergleichsprobe der Ausgangsmethylhydroxypropylcellulose, die der gleichen Behandlung unterzogen war, mit Ausnahme des Zusatzes an Dodecenylbernsteinsäureanhydrid, hatte bei einem pH-Wert von 7 eine Viskosität von 1 440 mPa•s bei 25 ° C nach Brookfield.

Beispiel 4

20 g der gleichen Methylhydroxypropylcellulose wurde wie in Beispiel 3 behandelt, jedoch mit dem Unterschied, daß Alkenyl-($C_{16-18}$)bernsteinsäureanhydrid in einer Menge von 1,2 g eingesetzt wurde. Es wurden 2,5 Gew.-% von Alkenylbernsteinsäuregruppen in die Methylhydroxypropylcellulose eingeführt. Die Viskosität bei pH 7 lag bei 17 500 mPa•s bei 25 ° C nach Brookfield, bei pH 8 wurden 21 000 mPa•s festgestellt. Senkte man den pH-Wert auf 6 ab, ging die Viskosität auf 400 mPa•s in der 1 %igen Lösung bei 25 ° C zurück.

Beispiel 5

Wie in Beispiel 3 beschrieben wurden 20 g einer handelsüblichen Hydroxypropylcellulose mit 2 g Dodecenylbernsteinsäureanhydrid behandelt. Dabei wurden in den Celluloseether 4,8 Gew.-% an Dodecenylbernsteinsäuregruppen eingeführt. Auch hier wurde eine starke Abhängigkeit der 1 gew.-%igen wäßrigen Lösung der veresterten Hydroxylpropylcellulose hinsichtlich der Viskosität bei 25 ° C nach Brookfield beobachtet. Bei einem pH-Wert von 8 wurden 2 000 mPa•s gemessen, während bei pH 7 ein Wert von 35 000 mPa•s bei 25 ° C erreicht wurde.

Eine Vergleichsprobe, welche der gleichen Behandlung, jedoch ohne Zusatz von Dodecenylbernsteinsäureanhydrid unterworfen wurde, hatte bei einem pH-Wert von 7 nur eine Viskosität von 620 mPa•s nach Brookfield bei 25 ° C.

Beispiel 6

100 g einer handelsüblichen Methylhydroxypropylcellulose wurden in 500 g trockenem Toluol suspendiert und mit einer Lösung von 15 g Dodecenylbernsteinsäureanhydrid in 20 ml Toluol versetzt. Die Reaktionsmischung wurde während 3 Stunden bei 90 ° C gerührt und nach dem Abkühlen filtriert; durch mehrmaliges Waschen mit überschüssigem Aceton wurde der modifizierte Celluloseether gereinigt. Anschließend wurde im Labortrockenschrank bis zur Gewichtskon stanz bei 90 ° C getrocknet und auf einer Labormühle auf eine Korngröße von 0,2 mm gemahlen. Die Analyse ergab, daß 3,5 Gew.-% an Dodecenylbernsteinsäureresten in den Celluloseether eingeführt worden waren.

In 1 gew.-%iger wäßriger Lösung wurde eine Viskosität von 4 600 mPa•s (Brookfield-Viskosimeter 20 Upm; 25 ° C; pH-7).

Demgegenüber hatte eine Probe, die in der gleichen Weise, jedoch ohne den Zusatz von Dodecenylbernsteinsäureanhydrid, behandelt worden war, eine Viskosität von 1 150 mPa•s in 1 gew.-%iger Lösung bei 25 ° C.

**Patentansprüche**

**1.** Verfahren zur Herstellung von wasserlöslichen Derivaten von Celluloseethern durch Reaktion von

(A) 100 Gew.-Teilen wenigstens eines wasserlöslichen Celluloseethers, ausgewählt aus der Gruppe aus Methylcellulose, Methoxycellulose, Hydroxyethylcellulose, Hydroxypropylcellulose und Methylhydroxypropylcellulose mit

(B) 3 bis 30 Gew.-Teilen wenigstens eines $G_{8-18}$-Alkyl- oder -Alkenylbernsteinsäureanhydrids unter folgenden Reaktionsbedingungen:

(1) frei von Wasser,

(2) frei von Alkali

(3) bei einer Temperatur von 40 bis 150 ° C und

(4) im Verlauf von 0,5 bis 12 h,

unter Erhalt eines hochviskosen Derivats so daß von 1 bis 8 Gew.-% (basierend auf dem Gewicht des Celluloseethers) wenigstens des Alkyl oder Alkenylbernsteinsäureanhydrids in das Celluloseether-Molekül eingeführt werden.

**2.** Verfahren nach Anspruch 1, gekennzeichnet durch die Verwendung wenigstens eines 10-14 C-Atome enthaltenden Alkyl- oder Alkenylbernsteinsäureanhydrids.

**3.** Verfahren nach Anspruch 1 oder 2, dadurch gekennzeichnet, daß die Umsetzung bei Temperaturen im Bereich von 60 bis 110 °C durchgeführt wird.

**4.** Verfahren nach Anspruch 1 oder 2, dadurch gekennzeichnet, daß die Umsetzung im Verlauf von 2 bis 6 h durchgeführt wird.

**5.** Verfahren nach Ansprüchen 1 bis 4, dadurch gekennzeichnet, daß 3 bis 6 Gew.-% des Alkyl oder Alkenylbernsteinsäureanhydrids in das Celluloseether-Molekül eingeführt werden.

**6.** Verwendung der Verfahrensprodukte nach Anspruch 1 als Verdickungsmittel für wäßrige Tensidlösungen und Farbdispersionen sowie hydraulische härtende Baustoffmassen.

**7.** Verwendung der Verfahrensprodukte nach Anspruch 1 als Schutzkolloide und/oder Emulgatoren bei der Suspensionspolymerisation von wasserunlöslichen Monomeren in wäßriger Phase.

**Claims**

**1.** A process for the production of water-soluble derivatives of cellulose ethers by reacting

(A) 100 parts by weight of at least one water-soluble cellulose ether selected from the group of methyl cellulose, methoxy cellulose, hydroxyethyl cellulose, hydroxypropyl cellulose and methylhydroxypropyl cellulose with

(B) from 3 to 30 parts by weight of at least $C_{8-18}$-alkyl or alkenyl succinic acid anhydride under the following conditions :

(1) free from water;

(2) free from alkali;

(3) at a temperature of from 40 °C to 150 °C; and

(4) within from 0.5 to 12 hours;

to obtain a highly viscous derivative so that from 1 to 8% by weight (based on the weight of the cellulose ether) of at least the alkyl or alkenyl succinic acid anhydride are introduced into the cellulose ether molecule.

**2.** The process according to claim 1, characterized by the use of at least one alkyl or alkenyl succinic acid anhydride containing from 10 to 14 carbon atoms.

**3.** The process according to claims 1 or 2, characterized in that the reaction is carried out at temperatures within the range of from 60 °C to 110 °C.

**4.** The process according to claims 1 or 2, characterized in that the reaction is carried out within from 2 to 6 hours.

**5.** The process according to claims 1 to 4, characterized in that from 3 to 6% by weight of the alkyl or alkenyl succinic acid anhydride are introduced into the cellulose ether molecule.

**6.** Use of the products resulting from the process according to claim 1 as thickeners for aqueous surfactant solutions and colorant dispersions as well as hydraulically setting building materials.

**7.** Use of the products resulting from the process according to claim 1 as protective colloids and/or emulsifiers in the suspension polymerization of water-insoluble monomers in aqueous phase.

## Revendications

1. Procédé pour la préparation de dérivés hydrosolubles d'éthers de cellulose, par réaction de :
   (A) 100 parties en poids d'au moins un éther de cellulose soluble dans l'eau, choisi parmi la méthylcellulose, la méthoxycellulose, l'hydroxyéthylcellulose, l'hydroxypropylcellulose et la méthylhydroxypropylcellulose, avec
   (B) 3 à 30 parties en poids d'au moins un anhydride alkyl- ou alcényl ($C_8$-$C_{18}$)-acide succinique, dans les conditions réactionnelles suivantes :
   (1) absence d'eau,
   (2) absence d'alcali,
   (3) à une température de 40 à 150 ° C et
   (4) en l'espace de 0,5 à 12 heures,
   avec obtention d'un dérivé très visqueux, de sorte que de 1 à 8 % en poids (par rapport au poids de l'éther de cellulose) au moins de l'anhydride alkyl- ou alcényl-acide succinique sont introduits dans la molécule d'éther de cellulose.

2. Procédé selon la revendication 1, caractérisé par l'utilisation d'au moins un anhydride alkyl- ou alcénylacide succinique contenant 10-14 atomes de carbone.

3. Procédé selon la revendication 1 ou 2, caractérisé en ce que la réaction est effectuée à des températures dans la plage de 60 à 110 ° C.

4. Procédé selon la revendication 1 ou 2, caractérisé en ce que la réaction est effectuée en l'espace de 2 à 6 heures.

5. Procédé selon l'une quelconque des revendications 1 à 4, caractérisé en ce que de 3 à 6 % en poids de l'anhydride alkyl- ou alcényl-acide succinique sont introduits dans la molécule d'éther de cellulose.

6. Utilisation des produits du procédé selon la revendication 1, en tant qu'épaississants pour solutions aqueuses d'agents tensioactifs et dispersions de couleurs ainsi que matériaux de construction à durcissement hydraulique.

7. Utilisation des produits du procédé selon la revendication 1 comme colloïdes de protection et/ou émulsionnants pour la polymérisation en suspension de monomères insolubles, en phase aqueuse.